# EUROPÄISCHE PATENTSCHRIFT

(11) **EP 2 510 249 B1**
(45) Veröffentlichungstag und Bekanntmachung des Hinweises auf die Patenterteilung: **01.03.2017**
(21) Anmeldenummer: 10805426.3
(22) Anmeldetag: 29.11.2010
(51) Int. Cl.: F16B 37/06

(54) **EINPRESSTEIL MIT DOPPELRÄNDEL**
PRESS-IN PART HAVING A DOUBLE KNURL
PIÈCE INJECTÉE AVEC DOUBLE MOLETTE

(30) Priorität: 10.12.2009 DE 202009015716 U
(43) Veröffentlichungstag der Anmeldung: 17.10.2012
(73) Patentinhaber: Kerb-Konus-Vertriebs-GmbH, 92224 Amberg (DE)
(72) Erfinder: HAUSMANN, Johann, 92253 Schnaittenbach (DE)
(74) Vertreter: Zech, Stefan Markus
(86) Internationale Anmeldenummer: PCT/EP2010/068406
(87) Internationale Veröffentlichungsnummer: WO 2011/069855

(56) Entgegenhaltungen:
- EP-A1- 0 556 767
- DE-A1- 2 055 272
- FR-A1- 2 461 142
- GB-A- 938 936

## Beschreibung

Die Erfindung betrifft ein Einpressteil zum Verpressen in einer Aussparung eines Werkstückes umfassend einen Schaft, welcher zum Einführen in die Aussparung und zum anschließenden Verpressen darin vorgesehen ist, und ein Kopfteil, welches an den Schaft einstückig anschließt und nach dem Verpressen des Einpressteils aus dem Werkstück ragt, nach dem Oberbegriff des Patentanspruches 1 (FR 2 461 142 A1).

Nicht nur in der Metall verarbeitenden Industrie ist es durchaus üblich, Verbindungen zwischen unterschiedlichen Komponenten über Einpressteile herzustellen, welche zur Ausbildung von Verbindungen mit großen Verbindungs- und Haltekräften in den Werkstücken verpresst werden. Derartige Einpressteile werden zudem auch dazu verwendet, um einzelne Bauteile kontrolliert und kosteneffizient miteinander zu verbinden. Aufgrund des kontrollierten Verpressens der zur Verbindung vorgesehenen Einpressteile können die mit ihnen erzielten Verbindungen auch weitreichenden Anforderungen gerecht werden. Insbesondere können Einpressteile mit unterschiedlichen Einpresskräften in ein Werkstück eingefügt werden, so dass sie insbesondere auch großen Zug- bzw. Druckkräften standhalten können.

Abgesehen von den Zug- und Druckkräften, welche typischerweise in Verlängerung zu einer Einpressrichtung des Einpressteils in das Werkstück wirken, können auf das Einpressteil mitunter auch hohe Drehkräfte oder Drehmomente einwirken, welche bei nicht ausreichender Verankerung des Einpressteils in dem Werkstück zu einem ungewünschten Verdrehen des Einpressteils führen. Um einem solchen unerwünschten Vorgang entgegenzuwirken, sind Einpressteile vielfach mit einer Rändel versehen, welche eine um das Einpressteil umlaufende Anordnung von Materialzählen bzw. Materialriefen aufweisen. Die Rändel schneiden beim Verpressen eines Einpressteils in einem Werkstück in die Wandungen einer zum Verpressen vorgesehenen Aussparung ein, und verhindern somit bei Beaufschlagen des verpressten Einpressteils mit einem Drehmoment ein Verdrehen desselben in der Aussparung. Beim Verpressen eines eine solche Rändel aufweisenden Einpressteils in einem Werkstück kommt es während des Verpressvorgangs typischerweise zu einem Materialfluss im Bereich der Wandungen der Aussparung, wobei der Materialfluss zu einem sicheren Verpressen des Einpressteils in dem Werkstück so erfolgen muss, dass ausreichend Material des Werkstückes zwischen die Zähne bzw. Riefen der Rändel einfließt und folglich das Einpressteil fixiert. Dieser Materialfluss ist von einer Vielzahl an vorgegebenen Materialkenngrößen abhängig, darunter beispielsweise die Härte und Zähigkeit des Materials des Werkstückes.

Wie die Anmelderin nun in eigenen Versuchen herausgefunden hat, kann beim Verpressen eines mit einer Rändel versehenen Einpressteils in ein Werkstück der Materialfluss mitunter nicht ausreichend sein, um eine gewünschte Drehfixierung des Einpressteils in dem Werkstück zu erreichen. Insbesondere bei relativ harten Materialien eines Werkstückes kann es während des Verpressens des Einpressteils in dem Werkstück zu Materialumformungen des Werkstückes kommen, welche die Rändel nur unvollständig in das Material des Werkstückes einschneiden lässt bzw. nur unvollständig das Material des Werkstückes zwischen die Zähne bzw. Riefen einfließt. Eine solche mangelnde Drehfixierung resultiert folglich in einer für viele Anwendungen nicht ausreichenden Drehbelastbarkeit des Einpressteils.

Gemäß eines solchen Nachteils aus dem Stande der Technik besteht ein technisches Bedürfnis, ein Einpressteil zum Verpressen in einer Aussparung eines Werkstückes vorzuschlagen, welches im Vergleich zu einem aus dem Stande der Technik bekannten Einpressteil eine verbesserte Drehbelastung nach dem Verpressen erlaubt. Der vorliegenden Erfindung liegt folglich diese Aufgabe zugrunde.

Diese Aufgabe wird durch ein Einpressteil zum Verpressen in einer Aussparung eines Werkstückes nach Patentanspruch 1 gelöst.

Insbesondere wird die Aufgabe durch ein Einpressteil zum Verpressen in einer Aussparung eines Werkstückes gelöst, welches Einpressteil einen Schaft umfasst, der zum Einführen in die Aussparung und zum anschließenden Verpressen darin vorgesehen ist, und ein Kopfteil, welches an den Schaft einstückig anschließt und nach dem Verpressen des Einpressteils aus dem Werkstück ragt. Der Schaft des Einpressteils weist hierbei wenigstens zwei unterschiedliche Rändel auf, welche nach dem Verpressen des Einpressteils in der Aussparung sich mit dem Material des Werkstückes in Eingriff befinden und das Einpressteil verdrehsicher mit dem Werkstück verbinden.

Ein wesentlicher Gedanke der Erfindung liegt darin, dass der in die Aussparung des Werkstückes eingefügte und verpresste Schaft des Einpressteils wenigstens zwei unterschiedliche Rändel aufweist. Rändel sind hierbei, wie auch im Folgenden, im Sinne von um den Schaft umlaufenden Zähnen, Riefen bzw. Materialvorsprüngen zu verstehen. Das Vorsehen von zwei unterschiedlichen Rändeln erlaubt grundsätzlich, die Rändeldimensionen bzw. Rändelgeometrien auf das Fließverhalten des Materials des Werkstückes besser abzustimmen, so dass beim Verpressen des Einpressteils in die Aussparung des Werkstückes ein besseres Eingreifen des Materials des Werkstückes in die Zähne, bzw. Riefen oder um die Materialvorsprünge der Rändel erlauben. Folglich kann auch bei ungünstigem Fließverhalten des Werkstückes, beispielsweise bei einem Werkstück dessen Material eine hohe Zähigkeit aufweist, die Kombination von wenigstens zwei unterschiedlichen Rändeln auf zwei voneinander verschiedenen Schaftabschnitten noch eine ausreichende Drehfixierung gewährleisten. Die Rändel können hierbei insbesondere derart angeordnet sein, dass ein Eingriff des Materials des Werkstückes infolge der Materialumformung zu unterschiedlichen Zeitpunkten während des Verpressens erfolgt und folglich verschiedene Materialabschnitte mit jeweils unterschiedlichen Rändeln in Eingriff gelangen.

Erfindungsgemäß weisen die zwei Rändel voneinander abweichende Zahndichten und/oder Zahnformen auf. Durch die Wahl geeigneter Zahndichten bzw. Zahnformen wird ebenfalls die Materialumformung des Materials des Werkstückes während des Verpressens gezielt beeinflusst. Insbesondere die gegenseitige Abstimmung der Zahndichten bzw. Zahnformen der beiden Rändel kann ein gutes Eingreifen des Materials des Werkstückes in beide Rändel nach dem Verpressen ermöglichen.

Hier und im Folgenden sollen unter Verpressen alle möglichen Formen des Vernietens verstanden werden. Insbesondere können die erfindungsgemäßen Formen des Verpressens ein Einpressen des Einpressteils in eine Aussparung eines Werkstückes beinhalten, wobei die Verbindung zwischen Einpressteil und Werkstück durch Materialfluss des Einpressteils und/oder des Werkstückes infolge des Einfügevorgangs resultiert. Weiter kann ein Verpressen umfasst sein, bei welchem das Einpressteil nach dem Einfügen des Einpressteils in die Aussparung des Werkstückes mechanisch umgeformt, insbesondere ein Schaft aufgeweitet wird, so dass eine Verbindung zwischen Einpressteil und Werkstück resultiert. Weiter kann ein Verpressen umfasst sein, bei welchem das Werkstück nach dem Einfügen des Einpressteils in die Aussparung des Werkstückes mechanisch umgeformt wird, so dass infolge von Materialfluss des Materials des Werkstückes in Befestigungsbereiche des Einpressteils eine Verbindung zwischen Einpressteil und Werkstück resultiert. Weiter können auch alle Mischformen dieser Verpressformen umfasst sein.

Bei einer ersten, besonders bevorzugten Ausführungsform des Einpressteils sind die wenigstens zwei Rändel durch einen nichtgerändelten Abschnitt des Schaftes, insbesondere durch eine nicht gerändelte Nut voneinander abgesetzt. Während des Verpressens des Einpressteils kann infolge des Materialflusses des Materials des Werkstückes auch Material in den nicht gerändelten Abschnitt des Schaftes, bzw. in die nicht gerändelte Nut einfließen, und erlaubt damit eine gezielte mechanische Beeinflussung und Steuerung der Materialumformung während des Verpressens. Der nichtgerändelte Abschnitt des Schaftes bzw. die nichtgerändelte Nut kann folglich das Eingreifen des Materials des Werkstückes in eine der wenigstens zwei Rändel infolge der Materialumlenkung verbessern. Zudem sichert das in den nichtgerändelten Abschnitt des Schaftes bzw. in die nichtgerändelte Nut einfließende Material das Einpressteil durch eine verbesserte Haltekraft in Bezug auf Zug- und Druckkräfte, die auf das Einpressteil einwirken. Demgemäß ist es auch möglich, die Verankerung des Einpressteils in dem Werkstück lediglich aufgrund des in den nichtgerändelten Abschnitt des Schaftes bzw. in die nichtgerändelte Nut einfließenden Materials zu gewährleisten. Der nicht gerändelte Abschnitt des Schaftes, bzw. die nicht gerändelte Nut können so geformt sein, dass ein gekrümmter Abschnitt umfasst wird. Dieser Abschnitt vermag eine besonders effektive Materialumlenkung beim Verpressen. Bevorzugt ist eine konkave Krümmung vorgesehen, wobei aber auch eine konvexe Krümmung vorgesehen sein kann. Weiter bevorzugt kann die Krümmung derart ausgeformt sein, dass sie eine Nut definiert. In einer weiteren Weiterführung können auch mehrere nicht gerändelte Abschnitte des Schaftes, bzw. nicht gerändelte Nuten vorgesehen sein.

In einer weiteren Ausführungsform des Einpressteils ist eine der wenigstens zwei Rändel in einem Übergangsabschnitt zwischen Kopfteil und dem Schaft angeordnet. Diese Anordnung erlaubt insbesondere bei Verpressen des Einpressteils in oberflächengehärtete Werkstücke eine besonders verdrehsichere Verankerung. Der Übergangsabschnitt ist hierbei im Sinne eines Übergangsbereiches zu verstehen, welcher zwischen Kopfteil und Schaft vorgesehen ist. Die geometrische Ausdehnung des Übergangsabschnittes kann hierbei in vorgegebenen Grenzen variabel gestaltet sein.

Gemäß einer weiteren Ausführungsform des Einpressteils ist wenigstens eine der wenigstens zwei Rändel, insbesondere die dem Kopfteil am nächsten angeordnete Rändel als Mehrkant ausgebildet. Ein Mehrkant ist hierbei als eine mehrere Materialvorsprünge im Umlauf um den Schaft ausgebildete Verformung zu verstehen, welche zwischen den Materialvorsprüngen linear verlaufende Kanten aufweist. Demzufolge ist ein Mehrkant als eine spezielle Ausführungsform einer Rändel zu verstehen. Wie eine Rändel, kann auch der Mehrkant beim Verpressen des Einpressteils in das Werkstück den Materialfluss und damit die Materialumformung geeignet beeinflussen. Die Beeinflussung erfolgt hierbei insbesondere derart, dass die Materialumformung einen zur verbesserten Fixierung geeigneten Eingriff zwischen die Zähne bzw. Riefen der zweiten anderen Rändel definiert.

In einer anderen Ausführungsform des Einpressteils sind die wenigstens zwei Rändel auf einer zylindrischen Umlauffläche des Schaftes angeordnet. Beim Verpressen des Einpressteils in eine im Querschnitt kreisförmige Aussparung wird folglich die Drehfixierung des Einpressteils durch Eingriff des Materials des Werkstückes in die Zähne bzw. Riefen der zwei Rändel gleichmäßig über die zylindrische Umlauffläche des Schaftes erreicht. Eine solche Anordnung erlaubt eine besonders verdrehsichere Verbindung zwischen Einpressteil und Werkstück.

Gemäß einer besonders vorteilhaften Ausführungsform des Einpressteils weist der Schaft eine zylinderförmige Symmetrie auf und die wenigstens zwei Rändel weisen voneinander abweichende geometrische Ausmaße im Querschnitt zu der Symmetrieachse des Schaftes, insbesondere unterschiedliche effektive Durchmesser auf. Die voneinander abweichenden geometrischen Ausmaße der beiden Rändel erlauben wiederum eine geeignete Anpassung der Geometrie des Einpressteils an das Materialflussverhalten des Materials des Werkstückes. Die unterschiedlichen Ausmaßen betreffen also die radialen Ausdehnungen, bzw. effektiven Durchmesser der wenigstens zwei Rändel. Hierbei kann die dem Kopfteil zugeordnete Rändel eine größere Radialausdehnung aufweisen, als die vom Kopfteil weiter entfernt liegende Rändel. Insbesondere kann die dem Kopfteil zugeordnete Rändel eine größere Radialausdehnung aufweisen als die Aussparung des Werkstückes, in welcher das Einpressteil zum Verpressen vorgesehen ist. Eine solche Größenverteilung erlaubt, dass beim Einpressen des Einpressteils in die Aussparung des Werkstückes ein Materialfluss durch Verdrängung bzw. Einschneiden in das Werkstückmaterial durch die dem Kopfteil zugeordnete Rändel erfolgt. Sind die Radialausdehnungen der wenigstens zwei Rändel so ausgeführt, dass Sie beide geringer sind als die Radialausdehnung der Aussparung des Werkstückes, kann immerhin noch eine Verbindung von Werkstück und Einpressteil durch gezielte Materialumformung des Einpressteils in der Aussparung und/oder des Materials um die Aussparung so erfolgen, dass eine Verbindung durch Materialfluss resultiert. Weiterhin können auch die wenigstens zwei Rändel eine Radialausdehnung aufweisen, welche beide größer sind als die Radialausdehnung der Aussparung des Werkstückes.

Gemäß einer weiteren Ausführungsform des Einpressteils weist der Schaft eine zylinderförmige Symmetrie auf und die wenigstens zwei Rändel voneinander abweichende geometrische Ausmaße in einem Querschnitt parallel zu der Symmetrieachse des Schaftes, insbesondere unterschiedliche Längen. Aufgrund der voneinander abweichenden geometrischen Ausmaße der beiden Rändel kann der Materialfluss des Materials des Werkstückes zum Eingriff in die beiden Rändel und zur Ausbildung einer Verdrehsicherung geeignet an das Material des Werkstückes angepasst sein. Demgemäß kann eine besonders gute Drehfixierung des Einpressteils in dem Werkstück erreicht werden.

In einer bevorzugten Ausführungsform des Einpressteils ist wenigstens eine der wenigstens zwei Rändel als Schrägrändel oder als Rändel mit achsparallelen Zähnen ausgebildet. Insbesondere das Vorsehen einer Schrägrändel ermöglicht den Materialfluss während des Verpressens des Einpressteils in dem Werkstück auch gezielt in eine senkrecht zur Einpressrichtung verlaufende Richtung des Einpressteils zu beeinflussen. Demzufolge kann der Eingriff des Materials des Werkstückes in die Rändel verbessert und die Verdrehsicherung des Einpressteils in dem Werkstück gesteigert werden.

Gemäß einer besonders bevorzugten Ausführungsform des Einpressteils weist der Schaft einen nicht gerändelten Einführungsabschnitt auf. Folglich wird das Einfügen des Einpressteils in die Aussparung des Werkstückes vor dem Verpressen erleichtert, wobei zudem eine geeignete automatische Zentrierung des Einpressteils in der Aussparung erfolgen kann. Gerade bei Verarbeiten einer großen Anzahl an Einpressteilen in industriellem Maßstab wird folglich die Anzahl an falsch verpressten Einpressteilen in Werkstücken deutlich vermindert.

Gemäß einer weiterhin besonders bevorzugten Ausführungsform des Einpressteils weist das Kopfteil und/oder der Schaft wenigstens bereichsweise einen Aufnahmeabschnitt auf. Der Aufnahmeabschnitt kann hierbei zur Aufnahme bzw. Verbindung oder Befestigung beliebiger Gegenstände ausgebildet sein. Demzufolge kann das Einpressteil als Verbindungsteil bzw. Verbindungselement aufgefasst werden, welches erlaubt, das Werkstück über das Einpressteil mit einem weiteren Gegenstand zu verbinden.

In einer weiterführenden Ausführungsform umfasst der Aufnahmeabschnitt Verbindungsmittel zum Verbinden mit einem weiteren Gegenstand. Derartige Verbindungsmittel erlauben eine feste bzw. auch lösbare Verbindung des Einpressteils mit einem Gegenstand, wobei der Gegenstand typischerweise geeignete Gegenverbindungsmittel aufweist, welche mit dem Verbindungsmittel des Aufnahmeabschnittes eine Verbindung ausformen können.

In einer weiterführenden Ausführungsform des Einpressteils ist das Verbindungsmittel als Schraubeninnengewinde, als Bayonettinnengewinde oder als Klemmvorrichtung ausgebildet. Folglich ist es möglich, einen Gegenstand mit einem geeignet ausgeformten Schraubenaußengewinde in einen Aufnahmeabschnitt mit einem geeignet ausgeformten Schraubeninnengewinde einzuschrauben und darin zu fixieren. Folglich erlaubt das Einpressteil eine schnelle und mechanisch belastbare Verbindung zwischen dem Gegenstand sowie dem Werkstück auszubilden.

Entsprechend einer weiteren besonders bevorzugten Ausführungsform des Einpressteils weist das Kopfteil und/oder der Schaft wenigstens bereichsweise einen stiftartigen Abschnitt auf. Hierbei kann der stiftartige Abschnitt Befestigungsmittel zum Verbinden mit einem weiteren Gegenstand umfassen. Im Gegensatz zu einem möglichen Aufnahmeabschnitt ist der stiftartige Abschnitt insbesondere dafür vorgesehen, in einen Aufnahmeabschnitt eines weiteren Gegenstandes einzugreifen. Mittels geeigneter Befestigungsmittel kann der stiftartige Abschnitt auch mit dem Gegenstand verbunden werden, so dass wiederum eine vorteilhafte Verbindung zwischen Werkstück und Gegenstand ausgebildet werden kann. Insbesondere ist der stiftartige Abschnitt mit einem Schraubenaußengewinde als Befestigungsmittel versehen, so dass dieser leicht mit einem ein geeignetes Schraubeninnengewinde aufweisenden Gegenstand durch Verschrauben verbunden werden kann.

Gemäß einer weiteren Ausführungsform des Einpressteils weist das Einpressteil einen rostbeständigen und/oder einen gehärteten, insbesondere pressgehärteten und/oder mikrolegierten Werkstoff auf. Damit kann das Einpressteil auch hohen Anforderungen an Härte bzw. Beständigkeit gerecht werden.

Einpressteile betreffen also in erster Linie Verbindungselemente, welche zum Verpressen (Vernieten) mit einem Werkstück vorgesehen sind und infolge des Verpressens mit dem Werkstück mechanisch verbunden werden. Die Einpressteile können bevorzugt so ausgeformt sein, dass sie Verbindungsabschnitte aufweisen, welche eine Verbindung des verpressten Einpressteils mit einem weiteren Gegenstand über insbesondere einen mechanischen Verbindungsabschnitt erlauben. Typische solche Verbindungsabschnitte können Aufnahmeabschnitte oder Aussparungen sein, welche zur Verbindung mit Gegenständen mit geeignetem Gegenverbindungsabschnitt zur Einführung in den Aufnahmeabschnitt oder in die Aussparung vorgesehen sind. Die einfachste derartige Form eines Aufnahmeabschnittes oder einer Aussparung ist eine zylindrische Bohrung mit Innengewinde, in welche eine Schraube mit entsprechend ausgeformtem Außengewinde eingedreht werden kann. Weiterhin können die Einpressteile auch so ausgeformt sein, dass die Verbindungsabschnitte als stiftartige oder geeignet geformte Befestigungsvorrichtungen bzw. als Fortsätze ausgebildet sind, welche ihrerseits in Aufnahmeabschnitten oder Aussparungen von zur Verbindung mit dem Einpressteil vorgesehenen Gegenständen eingefügt werden können. Die einfachste derartige Ausführungsform ist ein Einpressteil mit einem stiftartigen Fortsatz, welcher ein Schraubenaußengewinde aufweist, also einen Schraubenfortsatz, und in ein entsprechend passendes Innengewinde eines Gegenstandes eingeschraubt werden kann. Neben Schraubenverbindungen sind jedoch vorliegend auch noch Bajonettverbindungen, Clipverbindungen, Magnetverbindungen, Spreizverbindungen, Steckverbindungen, Hakenverbindungen, Klemmverbindungen sowie alle anderen Verbindungsformen, welche zur mechanischen Verbindung zweier Elemente geeignet sind, denkbar.

Insbesondere umfassen Einpressteile im Folgenden Gewindeeinsätze, Einnietmuttern, Einpressmuttern, Einpressgewindestifte, Clifa®-Verbindungselemente, Anchor®-Verbindungselemente, Einpress-Abstandsbuchsen, Einpress-Gewindebuchsen sowie Einpress-Abstandshalter.

Einpressteile sind dafür vorgesehen, eine Anzahl an Werkstücken miteinander fest zu verbinden bzw. aneinander zu befestigen oder ermöglichen die Verbindung eines Werkstücks mit anderen, zur Befestigung vorgesehener Elemente und Gegenstände. Hierbei wird zur Befestigung des Einpressteils an einem vorbestimmten Werkstück das Einpressteil typischerweise in eine Aussparung des Werkstücks eingefügt und anschließend durch umformendes Verpressen des Einpressteils oder des Werkstücks eine mechanisch belastbare Verbindung zwischen Einpressteil und den Werkstücken erzeugt.

In einer bevorzugten Ausführungsform des erfindungsgemäßen Einpressteils sind der äußere Schaftabschnitt und/oder der innere Schaftabschnitt wenigstens teilweise oberflächenbehandelt. Eine derartige Oberflächenbehandlung kann beispielsweise die elektrische Leitfähigkeit bzw. die Korrosionsbeständigkeit des Einpressteils betreffen, kann jedoch aber auch eine Verbesserung der Oberflächeneigenschaften des Schaftes betreffen, welche eine verbesserte Verpressung des Einpressteils ermöglichen. Weiterhin kann die Oberflächenbehandlung eine Härtung des Einpressteils betreffen, die einen verbesserten Materialfluss des Randmaterials des Schaftes bzw. der Werkstückausnehmung erzeugt. Die Oberflächenbehandlung kann selektiv vorgenommen sein, oder aber auch das gesamte Einpressteil betreffen. Insbesondere kann das Einpressteil wenigstens teilweise oberflächenbehandelt sein.

Fernerhin kann die Oberflächenbehandlung eine Verbesserung oder Unterdrückung der thermischen und elektrischen Leitfähigkeit des Schaftes des Einpressteils oder anderer Bereiche des Einpressteils betreffen. Insbesondere ist eine Oberflächenbehandlung in Form eines Korrosionsschutzes auch unter Einfluss hoher Temperaturen umfasst, wobei Temperaturen bis zu 200 °C berücksichtigt sein können. Eine solche Oberflächenbehandlung erweist sich vor allem auch dann als geeignet, wenn das Einpressteil einen Gewindeabschnitt, insbesondere einen Innengewindeabschnitt, aufweist. In anderen bevorzugten Ausführungsformen kann die Oberflächenbehandlung alle Arten von Gewindesicherungen und Gewindedichtungen betreffen, und insbesondere unter Verwendung von Tuflok®, Nytemp®, Nyseal®, Nystay®, Nyplast®, Nytorq®, Nycote® und Precote® 3M® erfolgen.

Weitere Ausführungsformen der Erfindung ergeben sich aus den Unteransprüchen.

Nachfolgend wird die Erfindung anhand von Ausführungsbeispielen beschrieben, die anhand der Abbildung näher erläutert werden.

Hierbei zeigen:
- Fig. 1a: eine seitliche Querschnittansicht durch eine erste Ausführungsform eines erfindungsgemäßen Einpressteils;
- Fig. 1b: eine schematische Ansicht von unten auf das in Fig. 1a gezeigte Einpressteil;
- Fig. 1c: eine weitere mögliche schematische Ansicht von unten auf das in Fig. 1a gezeigte Einpressteil;
- Fig. 2: eine schematische seitliche Schnittansicht durch eine weitere Ausführungsform des erfindungsgemäßen Einpressteils;
- Fig. 3: eine schematische seitliche Schnittansicht durch eine weitere Ausführungsform des erfindungsgemäßen Einpressteils;
- Fig. 4: eine schematische seitliche Schnittansicht durch eine weitere Ausführungsform des erfindungsgemäßen Einpressteils;
- Fig. 5: eine schematische seitliche Schnittansicht durch eine weitere Ausführungsform des erfindungsgemäßen Einpressteils;
- Fig. 6a: eine schematische Schnittansicht durch eine Ausführungsform des erfindungsgemäßen Einpressteils zu Beginn des Verpressens in einem Werkstück;
- Fig. 6b: eine schematische Schnittansicht durch eine Ausführungsform des erfindungsgemäßen Einpressteils zu einem weiteren Zeitpunkt nach dem in Fig. 6a dargestellten Zeitpunkt;
- Fig. 6c: eine schematische Schnittansicht durch eine Ausführungsform des erfindungsgemäßen Einpressteils nach Beendigen des Verpressens in dem Werkstück;
- Fig. 7a: eine schematische seitliche Schnittansicht durch eine weitere Ausführungsform des erfindungsgemäßen Einpressteils;
- Fig. 7b: eine schematische seitliche Schnittansicht durch eine weitere Ausführungsform des erfindungsgemäßen Einpressteils;
- Fig. 7c: eine schematische seitliche Schnittansicht durch eine weitere Ausführungsform des erfindungsgemäßen Einpressteils; und
- Fig. 8: eine schematische seitliche Schnittansicht gemäß der in Fig. 7a dargestellten Ausführungsform des Einpressteils in vergrößerter Ansicht.

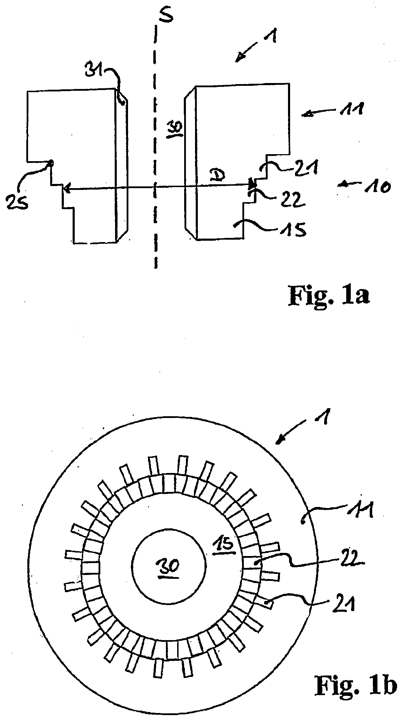

Fig. 1a zeigt eine seitliche Schnittansicht durch eine erste Ausführungsform des erfindungsgemäßen Einpressteils 1, welches ein Kopfteil 11 sowie einen daran anschließenden Schaft 10 aufweist. Das Kopfteil 11 sowie der Schaft 10 gehen im Bereich des Übergangabschnittes 25 ineinander über. Das Einpressteil 1 weist weiterhin einen mittig angeordneten Aufnahmeabschnitt 30 auf, welcher mit Verbindungsmitteln 31 versehen ist. Vorliegend ist der Aufnahmeabschnitt 30 als Bohrung ausgeführt, wobei die Wandungen der Bohrung 30 mit einem Schraubeninnengewinde als Verbindungsmittel 31 versehen ist. Das einstückige Einpressteil 1 weist zudem eine zylindrische Symmetrie mit einer Symmetrieachse S auf.

Der Schaft 10 des Einpressteils 1 umfasst auf der dem Kopfteil 11 abgewandten Seite einen Einführungsabschnitt 15, welcher endständig angeordnet ist. Der Einführungsabschnitt 15 weist hierbei keine Rändel auf, sondern ist als glatter den Schaft 10 umlaufender Abschnitt ausgeformt. Im Bereich des Übergangsabschnitts 25 zwischen dem Kopfteil 11 und dem Schaft 10 befindet sich eine erste Rändel 21 angeordnet. Zwischen der ersten Rändel 21 und dem mit einer glatten Oberfläche versehenen Einführungsabschnitt 15 ist eine zweite Rändel 22 angeordnet. Hierbei weisen beide Rändel 21 und 22 eine zylindersymmetrische Anordnung um den Schaft 10 herum auf. Im Vergleich zu der ersten Rändel 21 ist jedoch die zweite Rändel 22 in ihrem Durchmesser D senkrecht zu der Symmetrieachse S des Einpressteils 1 kleiner ausgeführt. Demzufolge ergibt sich der in Fig. 1a dargestellten Querschnittansicht im Verlauf vom Kopfteil 11 zum Schaft 10 eine stufenförmige Anordnung von erster Rändel 21, zweiter Rändel 22 und dem Führungsabschnitt 15.

Fig. 1b zeigt eine schematische Ansicht von unten auf das in Fig. 1a dargestellte Einpressteil 1, wobei die relative Dimensionierung nur als schematisch zu verstehen ist. Deutlich sichtbar weist die erste Rändel 21 eine geringere Zahndichte im Vergleich zur zweiten Rändel 22 auf. Die einzelnen Zähne der ersten Rändel 21 in der in Fig. 1b dargestellten Ansicht sind von unten betrachtet jeweils mit einer Aussparung zwischen zwei Zähnen der zweiten Rändel 22 ausgerichtet. Aufgrund des größeren Umfangs der ersten Rändel 21 im Vergleich zur zweiten Rändel 22 resultiert eine geringere Zahndichte. Darüber hinaus sind die einzelnen Zähne der Rändel 21 hinsichtlich ihrer Breite kleiner als die Zähne der zweiten Rändel 22. Die in Fig. 1b dargestellten Rändel 21 und 22 sind jedoch nur schematisch und beispielhaft zu verstehen. Insbesondere können die Zähne der ersten Rändel 21 sowie der zweiten Rändel 22 eine in dem dargestellten Querschnitt dreieckige Form aufweisen oder aber jede andere geeignete Querschnittsform. Insbesondere kann die Querschnittsform der Zähne der ersten Rändel 21 sich von der Querschnittsform der Zähne der zweiten Rändel 22 unterscheiden.

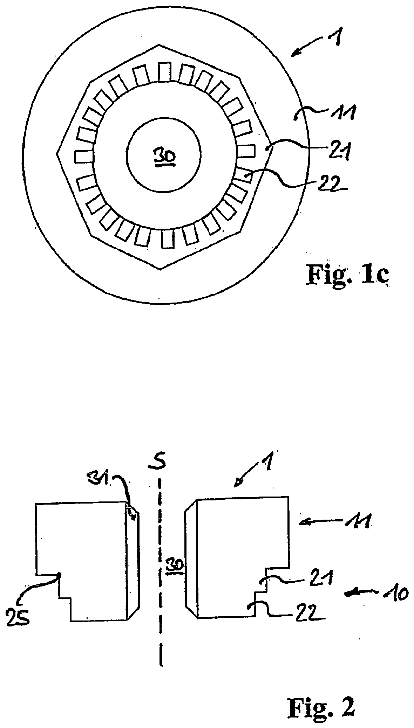

Fig. 1c zeigt eine weitere mögliche Ausführungsform des in Fig. 1a dargestellten Einpressteils im Querschnitt von unten. Hierbei unterscheidet sich das in Fig. 1c dargestellte Einpressteil 1 von dem in Fig. 1b dargestellten Einpressteil dahingehend, dass die erste Rändel 21 als Mehrkant ausgeführt ist. Insbesondere ist die erste Rändel 21 als Achtkant ausgeformt. Die dargestellten acht Kanten verlaufen zwischen acht als Spitzen ausgebildeten Materialvorsprüngen, welche mit den Spitzen von Zähnen einer Rändel vergleichbar sind, welche in Querschnittsform dreieckig ausgebildet sind. Demgemäß ist der in Fig. 1c dargestellte Mehrkant auch im Sinne einer Rändel zu verstehen.

Fig. 2 zeigt eine schematische Schnittansicht von der Seite durch eine weitere Ausführungsform des erfindungsgemäßen Einpressteils 1. Hierbei unterscheidet sich das in Fig. 2 dargestellte Einpressteil 1 von dem in Fig. 1a dargestellten Einpressteil 1 dahingehend, dass der Schaft 10 keinen Einführungsabschnitt 15 aufweist und folglich nur die erste Rändel 21 sowie die zweite Rändel 22 aufweist.

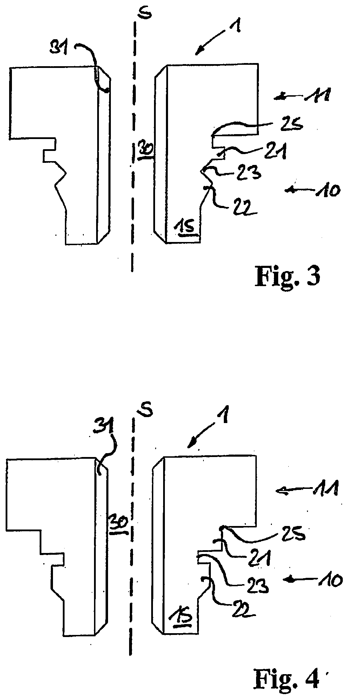

Fig. 3 zeigt eine weitere Ausführungsform eines erfindungsgemäßen Einpressteils in einer Schnittansicht von der Seite. Hierbei unterscheidet sich der in Fig. 3 dargestellte Schaft 10 von den Schäften 10 gemäß Figuren 1a und 2 dahingehend, dass die erste Rändel 21 nicht auf dem Übergangsabschnitt 25 zwischen Kopfteil 11 und Schaft 10 angeordnet ist. Vielmehr ist die erste Rändel 21 in seitlicher Querschnittansicht von dem Kopfteil 11 durch eine gerändelte oder nicht gerändelte Nut (vorliegend nicht mit Bezugszeichen versehen) abgesetzt. Zudem ist die erste Rändel 21 von der zweiten Rändel 22 durch eine nicht gerändelte Nut bzw. durch einen nicht gerändelten Abschnitt 23 abgesetzt. Die in Fig. 3 in seitlicher Querschnittansicht gezeigten Ausformungen der Zähne der ersten Rändel 21 sowie der zweiten Rändel 22 sind nur in schematischem Sinne zu verstehen. Die Ausformungen der jeweiligen Zähne können den technischen Anforderungen entsprechend angepasst sein.

Fig. 4 zeigt eine weitere Ausführungsform des erfindungsgemäßen Einpressteils 1 in einer schematischen seitlichen Schnittansicht. Hierbei ist die erste Rändel 21, wie auch in den Figuren 1a und 2 dargestellt, in dem Übergangsabschnitt 25 zwischen Kopfteil 11 und Schaft 10 angeordnet. Die erste Rändel 21 ist weiter von der zweiten Rändel 22 durch eine nicht gerändelte Nut 23 bzw. einen nicht gerändelten Abschnitt 23 unterbrochen. Die nicht gerändelte Nut 23 bzw. der nicht gerändelte Abschnitt 23 sind in der in Fig. 4 dargestellten Querschnittansicht im Wesentlichen rechteckförmig können aber auch im Wesentlichen dreieckförmig ausgebildet sein.

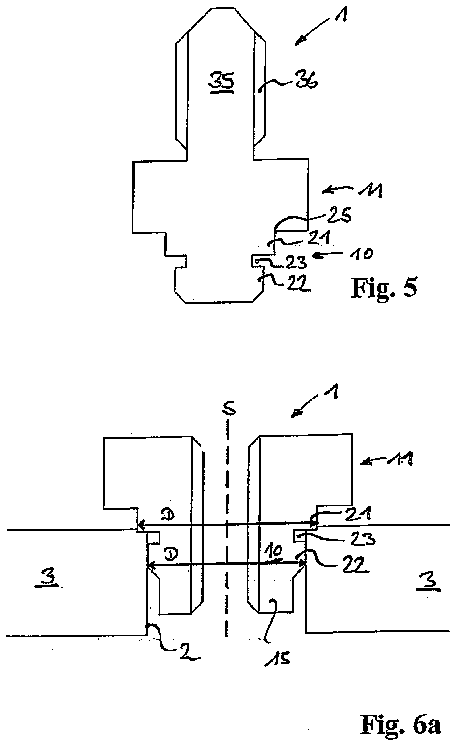

Fig. 5 zeigt eine weitere Ausführungsform des erfindungsgemäßen Einpressteils 1, wobei nicht wie in den vorhergehenden Figuren ein Aufnahmeabschnitt 30, sondern ein stiftartiger Abschnitt 35 vorgesehen ist, welcher Befestigungsmittel 36 aufweist. Die Befestigungsmittel 36 können hierbei in Form eines Schraubenaußengewindes ausgeführt sein. Die Ausformung des Schaftes 10 des in Fig. 5 dargestellten Einpressteils 1 entspricht hierbei weitgehend dem in Fig. 4 dargestellten Schaft 10, wobei jedoch anstelle eines Einführungsabschnittes 15 lediglich eine endständige und an die zweite Rändel 22 anschließende Verjüngung (vorliegend nicht mit Bezugszeichen versehen) vorgesehen ist. Der stiftartige Abschnitt 35 erlaubt einen Gegenstand (vorliegend nicht gezeigt) an dem Einpressteil 1 zu befestigen, wobei die Befestigung mittels der Befestigungsmittel 36 erfolgt. Insbesondere weist der Gegenstand einen geeigneten Aufnahmeabschnitt auf, welcher ein an die Befestigungsmittel 36 angepasstes Gegenbefestigungsmittel aufweist, so dass das Einpressteil 1 mit dem Gegenstand verbunden werden kann.

Fig. 6a stellt in seitlicher Schnittansicht den Vorgang des Verpressens eines Einpressteils 1 in eine Aussparung 2 eines Werkstückes 3 dar. Das Einpressteil 1 entspricht dem in Fig. 4 dargestellten Einpressteil 1. Die Aussparung 2 ist in der dargestellten Querschnittansicht so bemessen, dass die Ausdehnung quer zur Symmetrieachse S des Einpressteils 1 etwas größer als der Durchmesser D der zweiten Rändel 22 im Querschnitt senkrecht zur Symmetrieachse S ist. Der Durchmesser der ersten Rändel 21 senkrecht im Querschnitt zur Symmetrieachse S ist jedoch größer als das Ausmaß der Aussparung 2, so dass beim zentrierten Einführen des Einpressteils 1 in die Aussparung 2 des Werkstückes 3 die Zähne der zweiten Rändel 22 an der Innenwandung der Aussparung 2 anliegen können und die Zähne der ersten Rändel 21 auf der zum Einführungsabschnitt 15 zugewandten Seite auf der Oberfläche des Werkstückes 3 anliegen. Beim Verpressen des Einpressteils 1 mit einem vorliegende nicht weiter gezeigten Einpresswerkzeug schneiden sich die Zähne der ersten Rändel 21 in die der Aussparung 2 nächstgelegenen Bereiche des Werkstückes 3 ein und verformen dieses. Hierbei können sich auch die Zähne selbst verformen.

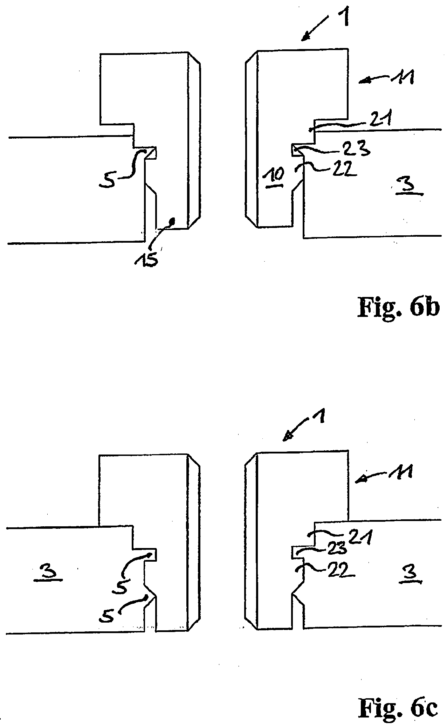

Wie in einem in Fig. 6b gezeigten, nachfolgenden Zeitpunkt dargestellt, resultiert die Verformung des Werkstückes 3 in einer Materialumformung 5, welche teilweise in die nicht gerändelte Nut 23 des Einpressteils 1 einfließt und eingreift. Gleichzeitig greift Material des Werkstückes 3 zwischen die Zähne der ersten Rändel 21 ein und sorgen für eine Drehfixierung, wie sie auch bei Rändel aus dem Stande der Technik bekannt ist.

Bei weiterem Verpressen des Einpressteils 1 in die Aussparung 2 des Werkstückes 3 kommt es zu weiteren Materialumformungen 5, so dass nach dem Ende des Verpressens die in Fig. 6c im Querschnitt dargestellte nicht gerändelte Nut 23 vollständig oder weitgehend vollständig mit dem Material des Werkstückes 3 ausgefüllt ist. Gleichzeitig floss infolge der Materialumformung 5 Material des Werkstückes 3 zwischen die Zähne der zweiten Rändel 22, so dass auch diese nun die Funktion einer Verdrehsicherung erfüllen können. Aufgrund der Materialumformung 5 kann auch gewährleistet werden, dass der Eingriff des Materials des Werkstückes 3 zwischen die Zähne der zweiten Rändel 22 weitgehend gleichmäßig erfolgen kann. Hervorzuheben ist, dass die in Fig. 6b gezeigte Materialumformung 5 des Werkstückes 3 so erfolgen kann, dass sie bei weiterem Verpressen des Einpressteils 1 in die Aussparung 2 des Werkstückes 3 in Eingriff zwischen die Zähne der zweiten Rändel 22 gelangt, und folglich zur Drehfixierung der zweiten Rändel beiträgt. Anders als beim bekannten Stand der Technik wird das umgeformte Material der Materialumformung 5 nicht nur zu einem Grat aufgeworfen, sondern derart vorteilhaft umgeformt, dass eine erhöhte Drehsicherheit des Einpressteils 1 resultiert.

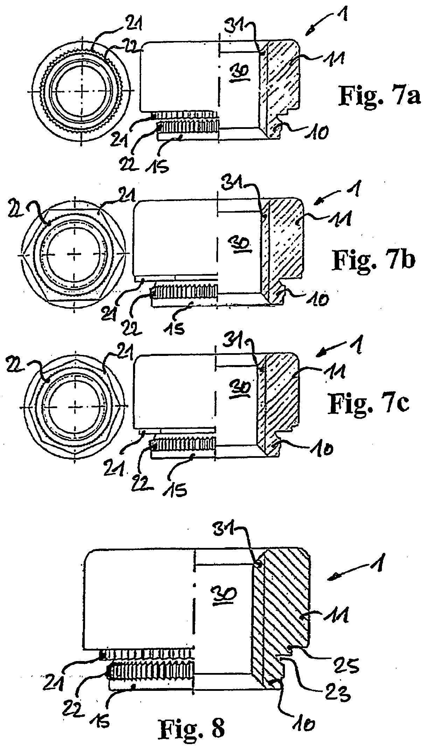

Fig. 7a zeigt eine weitere Ausführungsform des erfindungsgemäßen Einpressteils 1 sowohl in einer seitlichen Schnittansicht als auch in einer Aufsicht von unten. Hierbei umfasst das Einpressteil 1 wiederum ein Kopfteil 11 und einen daran anschließenden Schaft 10, welcher eine erste Rändel 21 sowie eine zweite Rändel 22 und einen Einführungsabschnitt 15 aufweist. Fernerhin umfasst das Einpressteil 1 einen Aufnahmeabschnitt 30 mit Verbindungsmitteln 31. In den in Figuren 6b und 6c dargestellten Ausführungsformen des erfindungsgemäßen Einpressteils 1 ist im Vergleich zu dem in Fig. 6a dargestellten Einpressteil 1 die erste Rändel 21 durch einen Mehrkant ersetzt. Hierbei weist das in Fig. 6b dargestellte Einpressteil 1 als erste Rändel 21 einen Sechskant und das in Fig. 6c dargestellte Einpressteil 1 einen Achtkant als erste Rändel 21 auf.

Fig. 8 stellt eine vergrößerte Ansicht des in Fig. 7a dargestellten Einpressteils 1 dar. Insbesondere ist die nicht gerändelte Nut 23 zwischen der ersten Rändel 21 und der zweiten Rändel 22 deutlich erkennbar, in welche nach dem Verpressen des Einpressteils 1 in ein Werkstück 3 ein Teil des Materials des Werkstückes 3 nach Materialfluss eingreift. Zum verbesserten Einführen des Einpressteils 1 in eine Aussparung 2 des Werkstückes 3 umfasst das Einpressteil 1 einen nicht gerändelten Einführungsabschnitt 15, welcher endständig auf dem Schaft 10 angeordnet ist.

An dieser Stelle sei darauf hingewiesen, dass alle oben beschriebenen Teile für sich alleine gesehen und in jeder Kombination, insbesondere die in den Zeichnungen dargestellten Details als erfindungswesentlich beansprucht werden. Abänderungen hiervon sind dem Fachmann geläufig.

### Bezugszeichen:

- 1: Einpressteil
- 2: Aussparung
- 3: Werkstück
- 5: Materialumformung
- 10: Schaft
- 11: Kopfteil
- 15: Einführungsabschnitt
- 21: Rändel
- 22: Rändel
- 23: nicht gerändelte(r) Abschnitt/Nut
- 25: Übergangsabschnitt
- 30: Aufnahmeabschnitt
- 31: Verbindungsmittel
- 35: stiftartiger Abschnitt
- 36: Befestigungsmittel
- S: Symmetrieachse
- D: Durchmesser

## Patentansprüche

1. Einpressteil (1) zum Verpressen in einer Aussparung (2) eines Werkstückes (3) umfassend einen Schaft (10), welcher zum Einführen in die Aussparung (2) und zum anschließenden Verpressen darin vorgesehen ist, und ein Kopfteil (11), welches an den Schaft (10) einstückig anschließt und nach dem Verpressen des Einpressteils (1) aus dem Werkstück (3) ragt,
**dadurch gekennzeichnet, dass**
der Schaft (10) wenigstens zwei unterschiedliche Rändel (21, 22) aufweist, welche nach dem Verpressen des Einpressteils (1) in der Aussparung (2) sich mit dem Material des Werkstückes (3) in Eingriff befinden und das Einpressteil (1) verdrehsicher mit dem Werkstück (3) verbinden,
wobei die zwei Rändel (21, 22) voneinander abweichende Zahndichten und/oder Zahnformen aufweisen.

2. Einpressteil nach dem Anspruch 1,
**dadurch gekennzeichnet, dass**
die wenigstens zwei Rändel (21, 22) durch einen nicht gerändelten Abschnitt (23) des Schaftes, insbesondere durch eine nicht gerändelte Nut (23), von einander abgesetzt sind.

3. Einpressteil nach dem einem der vorhergehenden Ansprüche,
**dadurch gekennzeichnet, dass**
eine der wenigstens zwei Rändel (21, 22) in einem Übergangsabschnitt (25) zwischen Kopfteil (11) und dem Schaft (10) angeordnet ist.

4. Einpressteil nach dem einem der vorhergehenden Ansprüche,
**dadurch gekennzeichnet, dass**
eine der wenigstens zwei Rändel (21, 22), insbesondere die dem Kopfteil (11) am nächsten angeordnete Rändel (21), als Mehrkant ausgebildet ist.

5. Einpressteil nach dem einem der vorhergehenden Ansprüche,
**dadurch gekennzeichnet, dass**
die wenigstens zwei Rändel (21, 22) auf einer zylindrischen Umlauffläche des Schaftes (10) angeordnet sind.

6. Einpressteil nach dem einem der vorhergehenden Ansprüche,
**dadurch gekennzeichnet, dass**
der Schaft (10) eine zylinderförmige Symmetrie aufweist und die wenigstens zwei Rändel (21, 22) voneinander abweichende geometrische Ausmaße im Querschnitt zu der Symmetrieachse (S) des Schaftes, insbesondere unterschiedliche effektive Durchmesser (D) aufweisen.

7. Einpressteil nach dem einem der vorhergehenden Ansprüche,
**dadurch gekennzeichnet, dass**
der Schaft (11) eine zylinderförmige Symmetrie aufweist und die wenigstens zwei Rändel (21, 22) voneinander abweichende geometrische Ausmaße in einem Querschnitt parallel zu der Symmetrieachse (S) des Schaftes (11), insbesondere unterschiedliche Längen aufweisen.

8. Einpressteil nach dem einem der vorhergehenden Ansprüche,
**dadurch gekennzeichnet, dass**
wenigstens eine der wenigstens zwei Rändel (21, 22) als Schrägrändel oder als Rändel mit achsparallelen Zähnen ausgebildet ist.

9. Einpressteil nach dem einem der vorhergehenden Ansprüche,
**dadurch gekennzeichnet, dass**
der Schaft (10) einen nicht gerändelten Einführungsabschnitt (15) aufweist.

10. Einpressteil nach dem einem der vorhergehenden Ansprüche,
**dadurch gekennzeichnet, dass**
das Kopfteil (11) und/oder der Schaft (10) wenigstens bereichsweise einen Aufnahmeabschnitt (30) aufweist.

11. Einpressteil nach Anspruch 10,
**dadurch gekennzeichnet, dass**
der Aufnahmeabschnitt (30) Verbindungsmittel (31) zum Verbinden mit einem weiteren Gegenstand umfasst.

12. Einpressteil nach Anspruch 11,
**dadurch gekennzeichnet, dass**
das Verbindungsmittel (31) als Schraubeninnengewinde, als Bajonettinnengewinde oder als Klemmvorrichtung ausgebildet ist.

13. Einpressteil nach dem einem der vorhergehenden Ansprüche,
**dadurch gekennzeichnet, dass**
das Kopfteil (11) und/oder der Schaft (10) wenigstens bereichsweise einen stiftartigen Abschnitt (35) aufweist.

14. Einpressteil nach Anspruch 13,
**dadurch gekennzeichnet, dass**
der stiftartige Abschnitt (35) Befestigungsmittel (36) zum Verbinden mit einem weiteren Gegenstand umfasst.

15. Einpressteil nach dem einem der vorhergehenden Ansprüche,
**dadurch gekennzeichnet, dass**
das Einpressteil (1) einen rostbeständigen und/oder einem gehärteten, insbesondere pressgehärteten und/oder mikrolegierten Werkstoff aufweist.

## Claims

1. Press-in part (1) for pressing into a recess (2) of a workpiece (3), comprising a shaft (10) provided for being introduced into the recess (2) and subsequently pressed therein, and a head part (11) integrally joined to the shaft (10) and protruding out of the workpiece (3) after pressing in the press-in part,
**characterized in that**
the shaft (10) comprises at least two different knurls (21, 22) which are in engagement with the material of the workpiece after the press-in part (1) is pressed into the recess (2) and connect the press-in part (1) to the workpiece (3) in an anti-twist manner,
wherein the two knurls (21, 22) have tooth densities and/or tooth shapes diverging from one other.

2. Press-in part according to claim 1,
**characterized in that**
the at least two knurls (21, 22) are offset from one another by a non-knurled portion (23) of the shaft, in particular by a non-knurled groove (23).

3. Press-in part according to any one of the preceding claims,
**characterized in that**
one of the at least two knurls (21, 22) is disposed in a transition portion (25) between the head part (11) and the shaft (10).

4. Press-in part according to any one of the preceding claims,
**characterized in that**
one of the at least two knurls (21, 22), in particular the knurl (21) disposed next to the head part (11) is formed as a polygon.

5. Press-in part according to any one of the preceding claims,
**characterized in that**
the at least two knurls (21, 22) are disposed on a cylindrical circumferential surface of the shaft (10).

6. Press-in part according to any one of the preceding claims,
**characterized in that**
the shaft (10) has a cylindrical symmetry, and the at least two knurls (21, 22) have geometric dimensions diverging from one another in the cross-section to the shaft's axis of symmetry (S), in particular different effective diameters (D).

7. Press-in part according to any one of the preceding claims,
**characterized in that**
the shaft (11) has a cylindrical symmetry, and the at least two knurls (21, 22) have geometric dimensions diverging from one another in a cross-section in parallel to the shaft's (11) axis of symmetry (S), in particular different lengths.

8. Press-in part according to any one of the preceding claims,
**characterized in that**
at least one of the at least two knurls (21, 22) is formed as an oblique knurl or as a knurl having axially parallel teeth.

9. Press-in part according to any one of the preceding claims,
**characterized in that**
the shaft (10) has a non-knurled insertion portion (15).

10. Press-in part according to any one of the preceding claims,
**characterized in that**
the head part (11) and/or the shaft (10) have/has a receiving portion (30) at least in some areas.

11. Press-in part according to claim 10,
**characterized in that**
the receiving portion (30) comprises connecting means (31) for connecting to a further object.

12. Press-in part according to claim 11,
**characterized in that**
the connecting means (31) is formed as a female screw thread, as a female bayonet thread od as a clamping device.

13. Press-in part according to any one of the preceding claims,
**characterized in that**
the head part (11) and/or the shaft (10) have/has a pin-like portion (35) at least in some areas.

14. Press-in part according to claim 13,
**characterized in that**
the pin-like portion (35) comprises connecting means (36) for connecting to a further object.

15. Press-in part according to any one of the preceding claims,
**characterized in that**
the press-in part (1) comprises a corrosion resistant and/or a hardened, in particular press-hardened and/or micro-alloyed material.

## Revendications

1. Pièce insérée à force (1) pour la compression dans un évidement (2) d'une pièce d'oeuvre (3) comprenant une tige (10), laquelle est prévue pour l'introduction dans l'évidement (2) et pour la compression consécutive dans celui-ci, et une pièce de tête (11), laquelle se joint d'une seule pièce à la tige (10) et dépasse de la pièce d'oeuvre (3) après la compression de la pièce insérée à force (1),
**caractérisée en ce que**
la tige (10) présente au moins deux molettes (21, 22) différentes, lesquelles se trouvent en prise avec le matériau de la pièce d'oeuvre (3) après la compression de la pièce insérée à force (1) dans l'évidement (2) et relient la pièce insérée à force (1) avec la pièce d'oeuvre (3) en blocage de rotation,
sachant que les deux molettes (21, 22) présentent des densités de dent et/ou formes de dent divergentes l'une de l'autre.

2. Pièce insérée à force selon la revendication 1,
**caractérisée en ce que**
les au moins deux molettes (21, 22) sont décalées l'une par rapport à l'autre par une section (23) non moletée de la tige, en particulier par une rainure (23) non moletée.

3. Pièce insérée à force selon l'une des revendications précédentes,
**caractérisée en ce que**
l'une des au moins deux molettes (21, 22) est disposée dans une section de transition (25) entre la pièce de tête (11) et la tige (10).

4. Pièce insérée à force selon l'une des revendications précédentes,
**caractérisée en ce que**
l'une des au moins deux molettes (21, 22), en particulier la molette (21) disposée le plus près de la pièce de tête (11), est constituée comme polygone.

5. Pièce insérée à force selon l'une des revendications précédentes,
**caractérisée en ce que**
les au moins deux molettes (21, 22) sont disposées sur une surface circonférentielle cylindrique de la tige (10).

6. Pièce insérée à force selon l'une des revendications précédentes,
**caractérisée en ce que**
la tige (10) présente une symétrie de forme cylindrique et les au moins deux molettes (21, 22) présentent des dimensions géométriques divergentes l'une de l'autre en coupe transversale par rapport à l'axe de symétrie (S) de la tige, en particulier des diamètres effectifs (D) différents.

7. Pièce insérée à force selon l'une des revendications précédentes,
**caractérisée en ce que**
la tige (11) présente une symétrie de forme cylindrique et les au moins deux molettes (21, 22) présentent des dimensions géométriques divergentes l'une de l'autre dans une coupe transversale parallèle à l'axe de symétrie (S) de la tige (11), en particulier des longueurs différentes.

8. Pièce insérée à force selon l'une des revendications précédentes,
**caractérisée en ce que**
au moins l'une des au moins deux molettes (21, 22) est constituée comme molette inclinée ou comme molette à dents parallèles à l'axe.

9. Pièce insérée à force selon l'une des revendications précédentes,
**caractérisée en ce que**
la tige (10) présente une section d'introduction (15) non moletée.

10. Pièce insérée à force selon l'une des revendications précédentes,
**caractérisée en ce que**
la pièce de tête (11) et/ou la tige (10) présentent/présent au moins par portion une section de réception (30).

11. Pièce insérée à force selon la revendication 10,
**caractérisée en ce que**
la section de réception (30) comprend des moyens de liaison (31) pour la liaison à un objet supplémentaire.

12. Pièce insérée à force selon la revendication 11,
**caractérisée en ce que**
le moyen de liaison (31) est constitué comme filetage intérieur à vis, comme filetage intérieur à baïonnette ou comme dispositif de serrage.

13. Pièce insérée à force selon l'une des revendications précédentes,
**caractérisée en ce que**
la pièce de tête (11) et/ou la tige (10) présentent/présent au moins par portion une section (35) de type broche.

14. Pièce insérée à force selon la revendication 13,
**caractérisée en ce que**
la section (35) de type broche comprend des moyens de fixation (36) pour la liaison à un objet supplémentaire.

15. Pièce insérée à force selon l'une des revendications précédentes,
**caractérisée en ce que**
la pièce insérée à force (1) présente un matériau résistant à la corrosion et/ou trempé, en particulier trempé sous pression et/ou microallié.
